# EUROPEAN PATENT SPECIFICATION

(11) **EP 0 381 794 B1**
(45) Date of publication and mention of the grant of the patent: **23.08.1995**
(21) Application number: 89102267.5
(22) Date of filing: 09.02.1989
(51) Int. Cl.: G06T 9/20

(54) **Method for registering image data**
Bilddatenspeicherungsverfahren
Procédé pour l'enregistrement de données d'images

(43) Date of publication of application: 16.08.1990
(73) Proprietor: YOZAN INC., Tokyo 155 (JP); SHARP KABUSHIKI KAISHA, Osaka 545 (JP)
(72) Inventor: Kumagai, Ryohei c/o EZEL Inc., Shinjuku-ku Tokyo 160 (JP)
(74) Representative: Grünecker, Kinkeldey, Stockmair & Schwanhäusser Anwaltssozietät

(56) References cited:
- EP-A- 0 215 975
- FR-A- 1 509 083
- US-A- 4 703 512
- IEE PROCEEDINGS-E, vol. 127, no. 4, July 1980, pages 143-147, Stevenage Herts, GB; B.G. BATCHELOR et al.: "Fast generation of chain code"
- IBM TECHNICAL DISCLOSURE BULLETIN, vol. 22, no. 7, December 1979, pages 2909-2912, New York, US; I. JONES et al.: "Image compression by the incremental generation of contours"

## Description

The present invention relates to a method according to the preamble part of claim 1.

Such a method is already known from EP-A-215 975. EP-A-215 975 proposes a method for describing the boundary line of a pattern by a chain-code-train. According to that method only the pixels defined in the boundary of the pattern are stored whereby it is suggested to define the orientation of successive boundary pixels to each other by chain-codes.

From IEEE proceedings-E, Vol. 127, No. 4, July 1980, pages 143-147, Stevenage.Herts GB; B.G. Batchelor, et al: "Fast generation of chain code" a hardware/software mechanism for improving the speed of chain code generation is known.

It is the object of the present invention to provide a method by which it is possible to describe a pattern with less information as needed within the prior art methods.

This object is solved by the subject matter of claim 1.

Preferred embodiments of the present invention are described in the following in regard to the accompanying drawings, which show:
Fig. 1 shows a configuration registered according to the embodiment of the present invention;
Figs 2 (1) to (3) show three type of configurations from which chain code train is generated;
Figs 3 (1) to (3) show three types of configurations from which chain code train in reverse direction to that of the chain in Fig. 2;
Fig. 4 shows start point of the chain code trains along inner and outer contour of a configuration; and
Fig. 5 is a table showing the data registered according to the embodiment of the present invention.

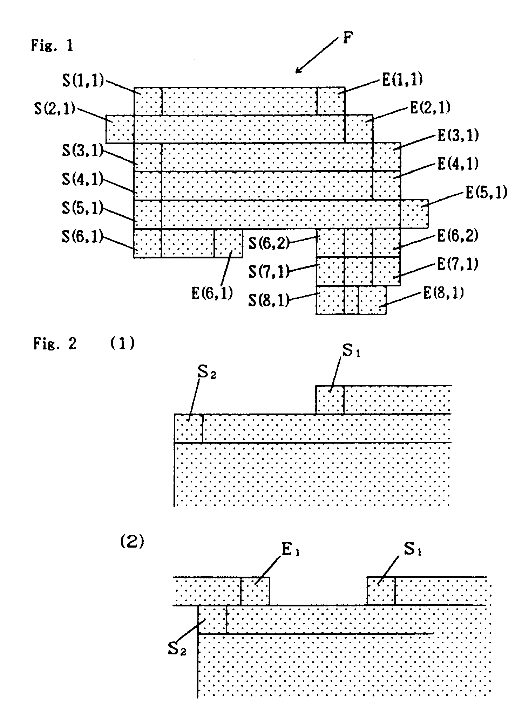

Fig. 1 shows a configuration F consisting of 8 scan lines. On each of the scan lines, there exists at least one pixel having configuration density, while the previous pixels have background density. Such pixel is called "start pixel" hereinafter. Similarly, on each of the scan line, there exists at least one pixel until which the density of the pixel is configuration density, while the following pixels have background density. Such pixel is called "end pixel" hereinafter.

In Fig. 1, start pixels are defined by references S(i, j) for i-th scan line as well as j-th start pixel on i-th scan line. End pixels are defined by references E(i, j) for i-th scan line as well as j-th end pixel on i-th scan line. On the first scan line, a start pixel S(1, 1) and an end pixel E(1, 1) exist. While on the sixth scan line, a start pixel S(6, 1) as well as end pixels E(6, 1) and E(6, 2) exist.

When an image is read by an image scanner, it is effective for improving the reading speed that only start and end pixels are detected rather than detecting all pixels. For reproducing the original image, corresponding start and end pixel are connected by a line. This connection is usually performed in short time, and performed with extremely high speed by a graphic processor.

Furthermore, Freemen's chain code or a similar vector code can be easily generated by the data consisting of start and end pixels.

Chain code can be given to a configuration in clockwise or anticlockwise direction. In the following description, anticlockwise direction is applied. Those skilled in the art will easily understand the clockwise chain code generation from the following description.

In Fig. 2, the first and second scan lines are shown. For generating the chain code, once a first pixel is determined, the next pixel to be indicated by the chain code should be found.

In Fig. 2 (1), a start pixel S1 on the first scan line and a start pixel S2 on the second scan line are shown. The pixel S2 exists leftward from the pixel S1, and there are no end pixels between S1 and S2. In this case, the pixel S2 is to be traced as a top or end pixel following to the pixel S1. Between the pixels S1 and S2, pixels on the second scan line are traced. So the pixel S1 is given a chain code "5", the pixel lower left pixel is given a chain code "4", from its lower left pixel to the previous pixel to the pixel S2, all pixels are given chain code of "4".

In Fig. 2 (2), there exists an end pixel E1 between the start pixels S1 and S2. In this case, the end pixel E1 is to be traced following the pixel S1. The start or end pixel to be traced after the pixel E1 is the leftward start pixel (not shown) corresponding to the end pixel E1. Chain code of "5" is given to the pixel S1, a chain code train of "4, 4, ..., 4, 3" is given to pixels between the pixels S1 and E1.

In Fig. 2 (3), a start pixel S2 exists rightward of a start pixel S1. The start or end pixel to be traced following to the start pixel S1 is the start pixel S2. A chain code train of "0, 0, ..., 0, 7" is given to pixels between pixels S1 and S2.

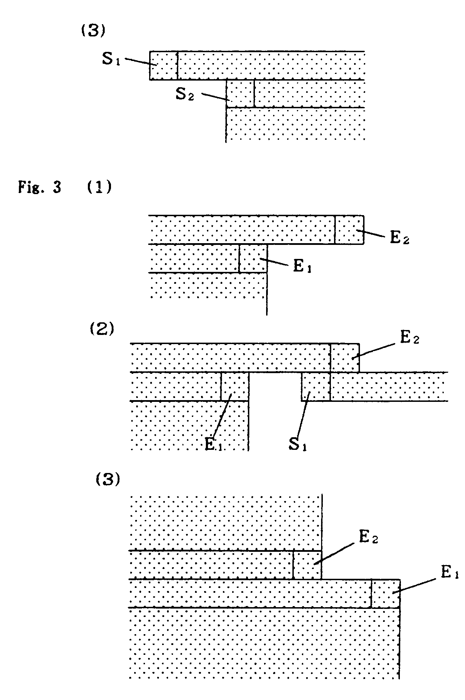

In Fig. 3 (1), an end pixel E2 exists rightward from an end pixel on the previous scan line. The end pixels E1 and E2 are end pixels; no pixels exist in the rightward area of the pixels E1 and E2. Furthermore, no start pixel exists between the pixels E1 and E2. The start or end pixel to be traced following to the end pixel E1 is the pixel E2. A chain code of "1" is given to the pixel E1 and a chain code train of "0, 0, ..." is given to pixels between pixels E1 and E2.

Fig. 3 (2), between the pixels E1 and E2 on the scan line similar to that of the pixel E1, a start pixel S1 exists. In this case, a start or end pixel to be traced after the end pixel E1 is the start pixel S1. After the end pixel E2, the start pixel corresponding to the end pixel E2 is to be traced as a start or end pixel. A chain code "1" is given to the end pixel E1. To the pixels between the end pixel E1 and start pixel S1, a chain code train of "0, 0, ..., 7" is given.

In Fig. 3 (3), there exist end pixels E1 and E2 which is rightward from the end pixel E1. The end pixel E2 is positioned on a scan line next to the scan line to which the end pixel E1 belongs. In this case, a start or end pixel to be traced next to the end pixel E1 is the end Pixel E2. A chain code "4" is given to the end pixel E1. A chain code train of "4, 4, ..., 3" is given to the pixels between the end pixels E1 and E2.

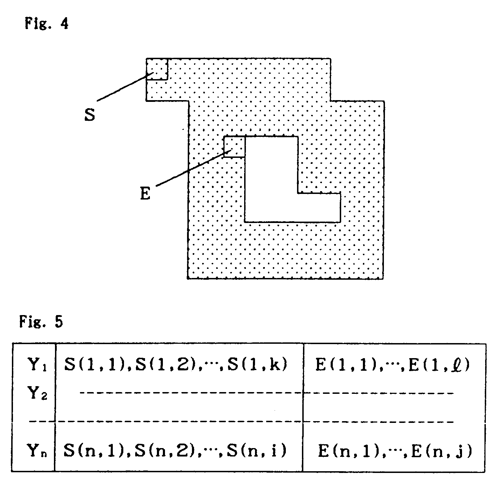

A chain code train is given to each connected configuration so as to define a closed loop. The start point of the chain code train is the pixel from which the scan line enters in the configuration. The start point cannot be other pixels than a start or end pixel. When the start point is a start pixel, a chain code train defines the outer peripheral of a configuration. When the start point is a end pixel, a chain code train defines the inner peripheral of a configuration. Fig. 4 shows such start pixel S and end pixel E. The start point is important for vectorizing etc.

Fig. 5 shows a table for storing configuration data by start and end pixels. Each raster is represented by y-coordinate such as y1, y2, . . . , yn. In each row representing a scan line, x-coordinates representing start or end pixels are stored.

When a chain code train is generated, the coordinates which are given to a chain code are indicated by an index. The end of a chain code train is found, when an indexed coordinate (pixel) is traced. The next chain code train is generated from a pixel whose coordinate is not indexed. The unindexed pixel is usually a pixel existing on more upper scan line and more leftward on the scan line.

For indicating the start point of a chain code train, the coordinate itself may be registered.

## Claims

1. A method allowing a graphic processor to generate a chain code train defining the contours of a configuration from stored image data defining start and end pixels of each scan line of a raster-type image,
said method being characterized by the following steps:
a) if a first start pixel exists on one scan line and on the next scan line a second start pixel precedes the first one in the horizontal scanning direction, and if there are no end pixels between said start pixels, then a segment of the chain code train is generated which describes a connecting line from said first to said second start pixel (S1, S2, figure 2(1));
b) if a first start pixel exists on a first scan line and on the next scan line a second start pixel precedes the first one in the horizontal scanning direction, and if on said first scan line an end pixel is horizontally located inbetween said start pixels, then a segment of the chain code train is generated which describes a connecting line from said first start pixel to said end pixel (S1, E1, figure 2(2));
c) if a first start pixel exists on one scan line and on the next scan line a second start pixel follows the first one in the horizontal scanning direction, and if there are no end pixels between said start pixels, then a segment of the chain code train is generated which describes a connecting line from said first to said second start pixel (S1, S2, figure 2(3));
d) if a first end pixel exists on one scan line and on the previous scan line a second end pixel follows the first one in the horizontal scanning direction, and if there are no start pixels between said end pixels, then a segment of the chain code train is generated which describes a connecting line from said first to said second end pixel (E1, E2, figure 3(1));
e) if a first end pixel exists on a first scan line and on the previous scan line a second end pixel follows the first one in the horizontal scanning direction, and if on said first scan line a start pixel is horizontally located inbetween said end pixels, then a segment of the chain code train is generated which describes a connecting line from said first end pixel to said start pixel (S1, E1, figure 3(2));
f) if a first end pixel exists on one scan line and on the previous scan line a second end pixel precedes the first one in the horizontal scanning direction, and if there are no start pixels between said end pixels, then a segment of the chain code train is generated which describes a connecting line from said first to said second end pixel (E1, E2, figure 3(3)).

2. A method according to claim 1
**characterized in that**
a chain-code-train starting with a start pixel is defined as an outer peripheral.

3. A method according to claim 1 or 2
**characterized in that**
a chain-code-train starting with an end pixel is defined as an inner peripheral.

## Patentansprüche

1. Verfahren, das es einem graphischen Prozessor erlaubt, einen Chain-Code-Zug zu erzeugen, der die Konturen einer Konfiguration von gespeicherten Bilddaten, die Start- und Endpixel für jede Abtastzeile eines Raster-Bildes festlegen, zu definieren, wobei das Verfahren durch folgende Schritte **gekennzeichnet** ist:
a) wenn zwischen einem ersten Startpixel in einer ersten Abtastzeile und einem zweiten Startpixel in einer zweiten Abtastzeile, der bezüglich der horizontalen Abtastrichtung vor dem ersten Startpixel liegt, sich kein Endpixel befindet, wird ein Segment eines Chain-Code-Zuges erzeugt, welches eine Verbindungslinie von dem ersten zum zweiten Startpixel beschreibt (S1, S2, Fig. 2(1));
b) wenn zwischen einem ersten Startpixel auf einer ersten Abtastzeile und einem zweiten Startpixel in der nächsten Abtastzeile, welcher in bezug auf die horizontale Abtastrichtung vor dem ersten Startpixel liegt, ein Endpixel in der ersten Abtastzeile liegt, wird ein Segment eines Chain-Code-Zuges erzeugt, durch das eine Verbindungslinie von dem ersten Startpixel zum Endpixel beschrieben wird (S1, E1, Fig. 2(2));
c) wenn einem ersten Startpixel in einer ersten Abtastzeile in bezug auf die horizontale Abtastrichtung in einer zweiten Abtastzeile ein zweiter Startpixel nachfolgt, und wenn sich kein Endpixel zwischen den Startpixeln befindet, wird ein Segment eines Chain-Code-Zuges erzeugt, durch das eine Verbindungslinie von dem ersten zum zweiten Startpixel beschrieben wird (S1, S2, Fig. 2(3));
d) wenn einem ersten Endpixel in einer ersten Abtastzeile ein zweiter Endpixel in der vorhergehenden Abtastzeile in bezug auf die horizontale Abtastrichtung nachfolgt und falls kein Startpixel zwischen den beiden Endpixeln vorliegt, so wird ein Segment eines Chain-Code-Zuges erzeugt, durch das eine Verbindungslinie von dem ersten zum zweiten Endpixel beschrieben wird (E1, E2, Fig.3(1));
e) wenn zwischen einem ersten Endpixel in einer ersten Abtastzeile und einem zweiten Endpixel in einer vorhergehenden Abtastzeile, welcher dem ersten Endpixel bezüglich der horizontalen Abtastrichtung nachfolgt, ein Startpixel zwischen den Endpixeln vorliegt, so wird ein Chain-Code-Zug erzeugt, durch den eine Verbindungslinie von dem ersten Endpixel zum Startpixel beschrieben wird (S1, E1, Fig. 3(2));
f) wenn sich zwischen einem ersten Endpixel auf einer ersten Abtastzeile und einem zweiten Endpixel in der vorhergehenden Abtastzeile, der bezüglich der horizontalen Abtastrichtung dem ersten Endpixel vorausgeht, kein Startpixel zwischen den beiden Endpixeln befindet, so wird ein Segment eines Chain-Code-Zuges erzeugt, durch das eine Verbindungslinie von dem ersten zum zweiten Endpixel beschrieben wird (E1, E2, Fig. 3(3)).

2. Verfahren nach Anspruch 1, **dadurch gekennzeichnet**, daß ein Chain-Code-Zug, der mit einem Startpixel beginnt, als äußerer Rand definiert wird.

3. Verfahren nach Anspruch 1 oder 2, **dadurch gekennzeichnet**, daß ein Chain-Code-Zug, der mit einem Endpixel beginnt, als innerer Rand definiert wird.

## Revendications

1. Procédé permettant à une machine de traitement de graphiques de générer un train de codes chaînés définissant les contours d'une configuration à partir de données d'image mémorisées définissant des éléments d'image de départ et de fin de chaque ligne de balayage d'une image à balayage tramé, le procédé étant caractérisé par les étapes suivantes :
a) si un premier élément d'image de départ existe sur une ligne de balayage et sur la ligne de balayage suivante, un second élément d'image de départ précède le premier élément d'image dans la direction horizontale de balayage, et s'il n'y a pas d'éléments d'image de fin entre lesdits éléments d'image de départ, alors un segment du train de codes chaînés est généré, qui décrit une ligne de connexion entre ledit premier et ledit second élément d'image de départ (S1, S2, figure 2(1)) ;
b) si un premier élément d'image de départ existe sur une première ligne de balayage et sur la ligne de balayage suivante, un second élément d'image de départ précède le premier élément d'image dans la direction horizontale de balayage, et si sur ladite première ligne de balayage un élément d'image de fin est situé horizontalement entre lesdits éléments d'image de départ, alors un segment du train de codes chaînés est généré, qui décrit une ligne de connexion entre ledit premier élément d'image de départ et ledit élément d'image de fin (S1, E1, figure 2(2)) ;
c) si un premier élément d'image de départ existe sur une ligne de balayage et sur la ligne de balayage suivante, un second élément d'image de départ suit le premier élément d'image dans la direction horizontale de balayage, et s'il n'y a pas d'éléments d'image de fin entre lesdits éléments d'image de départ, alors un segment du train de codes chaînés est généré, qui décrit une ligne de connexion entre ledit premier et ledit second élément d'image de départ (S1, S2, figure 2(3)) ;
d) si un premier élément d'image de fin existe sur une ligne de balayage et sur la ligne de balayage précédente, un second élément d'image de fin suit le premier élément d'image dans la direction horizontale de balayage, et s'il n'y a pas d'éléments d'image de départ entre lesdits éléments d'image de fin, alors un segment du train de codes chaînés est généré, qui décrit une ligne de connexion entre ledit premier et ledit second élément d'image de fin (E1, E2, figure 3(1)) ;
e) si un premier élément d'image de fin existe sur une première ligne de balayage et sur la ligne de balayage précédente, un second élément d'image de fin suit le premier élément d'image dans la direction horizontale de balayage, et si sur ladite première ligne de balayage, un élément d'image de départ est situé horizontalement entre lesdits éléments d'image de fin, alors un segment du train de codes chaînés est généré, qui décrit une ligne de connexion entre ledit premier élément d'image de fin et ledit élément d'image de départ (S1, E1, figure 3(2)) ;
f) si un premier élément d'image de fin existe sur une ligne de balayage et sur la ligne de balayage précédente, un second élément d'image de fin précède le premier élément d'image dans la direction horizontale de balayage, et s'il n'y a pas d'éléments d'image de départ entre lesdits éléments d'image de fin, alors un segment du train de codes chaînés est généré, qui décrit une ligne de connexion entre ledit premier et ledit second élément d'image de fin (E1, E2, figure 3(3)).

2. Procédé selon la revendication 1, caractérisé en ce qu'un train de codes chaînés commençant avec un élément d'image de départ est défini comme un périphérique extérieur.

3. Procédé selon l'une des revendications 1 ou 2, caractérisé en ce qu'un train de codes chaînés commençant avec un élément d'image de fin est défini comme un périphérique intérieur.
